Europäisches Patentamt

European Patent Office

Office européen des brevets

(19)

(11) Numéro de publication: **0 042 772**
**A1**

(12)

# DEMANDE DE BREVET EUROPEEN

(21) Numéro de dépôt: **81400850.4**

(22) Date de dépôt: **27.05.81**

(51) Int. Cl.³: **A 63 F 9/12**
**G 09 B 1/34**

(30) Priorité: **19.06.80 FR 8013578**
**19.11.80 FR 8024515**

(43) Date de publication de la demande:
**30.12.81 Bulletin 81/52**

(84) Etats contractants désignés:
**AT BE CH DE FR GB IT LI LU NL SE**

(71) Demandeur: **Nagorny, Gabriel**
**21, rue du Maréchal Vaillant**
**F-94130 Nogent Sur Marne(FR)**

(72) Inventeur: **Nagorny, Gabriel**
**21, rue du Maréchal Vaillant**
**F-94130 Nogent Sur Marne(FR)**

(74) Mandataire: **Sauvage, Renée**
**Cabinet Sauvage 62, Cours de Vincennes**
**F-75012 Paris(FR)**

(54) **Puzzle tridimensionnel.**

(57) Le puzzle comprend *n* éléments parallélépipèdiques identiques et une boîte parallélépipèdique dont les côtés sont des multiples de ceux d'un élément et dont le volume est approximativement égal à celui de *n* + 1 éléments.

Seuls les éléments placés le long des arêtes de la boîte (1) sont libres de se déplacer, les autres éléments (hachurés) formant entre eux une structure unitaire 2 qui les immobilisent.

Application à la création d'un jeu, d'un dispositif pour l'accomplissement de tests psychotechniques, d'un support publicitaire, etc.

fig. 1

EP 0 042 772 A1

## Puzzle tridimensionnel

La présente invention concerne un puzzle tridimensionnel composé d'éléments déplaçables par gravité à l'intérieur d'un espace délimité par les parois d'une boîte. Plus précisément, il comprend, d'une part, $n$ éléments parallélépipèdiques identiques et, d'autre part, une boîte parallélépipèdique transparente dont les côtés sont des multiples de ceux d'un élément et dont le volume est sensiblement égal à celui de $n + 1$ éléments, le volume d'un élément laissé vacant dans la boîte permettant le déplacement d'au moins certains éléments et la valeur des multiples étant telle que deux éléments au moins des $n$ éléments ne se trouvent pas en contact avec une arête de la boîte.

On connaît le principe du puzzle bidimensionnel appelé "glisse-chiffres" ou "pousse-pousse" inventé par Sam Loyd en 1873, dans lequel des carrés numérotés peuvent coulisser entre eux à l'intérieur d'un cadre rectangulaire. Ces carrés remplissent le cadre à l'exception de l'emplacement d'un carré laissé vide qui permet de modifier l'ordre des numéros par glissement relatif entre eux à l'aide d'un doigt de la main. Le jeu consiste, après avoir brouillé l'ordre des carrés, à replacer ceux-ci dans l'ordre numérique.

L'invention se propose de donner une dimension de plus au puzzle évoqué ci-dessus en réalisant un puzzle tridimensionnel.

La tentative la plus marquante faite jusqu'à présent pour réaliser un "pousse-pousse" tridimensionnel est représentée par le brevet US 3 845 959 déposé par D. KOSAREK, le 14 Novembre 1973. La solution décrite dans ce brevet comporte vingt-six cubes enfermés dans une boîte cubique en matière plastique dont chaque face est percée de neuf trous. La modification de la disposition des cubes s'effectue en introduisant les doigts dans les trous, ce qui permet d'atteindre et de déplacer les cubes grâce à l'espace laissé par l'absence du vingt-septième cube. Cette réalisation exige que les parois de la boîte soient relativement épaisses pour lui assurer une rigidité suffisante, ce qui rend malaisée l'introduction des doigts dans les trous pour déplacer les cubes. De plus, les cubes placés au centre de chacune des faces de la boîte sont très difficiles à déplacer car il est nécessaire, pour faire cette opération, d'écarter deux cubes situés sur une arête de la boîte. La difficulté est encore plus grande pour le cube situé au centre de la boîte.

Ces difficultés sont éliminées par l'invention en ce sens que, dans le puzzle qu'elle propose, le déplacement des éléments se fait uniquement par gravité, sans que le joueur touche aux éléments.

A cette fin, seuls les éléments placés le long des arêtes de la boîte sont libres de se déplacer, les autres éléments formant entre eux une structure unitaire qui les immobilisent.

Dans la plupart des cas, la structure unitaire revêt la forme d'une croix tridimensionnelle constituée par les éléments qui ne se trouvent pas en contact avec les arêtes de la boîte.

Il est nécessaire, si l'on veut utiliser la gravité pour déplacer les éléments, que les chemins possibles soient définis sans ambiguïté. Cette condition conduit à canaliser le déplacement des éléments uniquement le long des arêtes de la boîte, en maintenant fixes le ou les éléments situés au centre de chacune des faces de la boîte.

Dans une forme d'exécution préférée, les éléments sont cubiques et la boîte, sans que cela soit une obligation, est également cubique.

Selon un mode de réalisation particulièrement satisfaisant, la boîte cubique contient dix-neuf cubes mobiles et, comme structure unitaire, une croix tridimensionnelle composée de six cubes situés au centre de chacune des faces et du cube situé au centre de la boîte.

La structure unitaire peut être réalisée sous la forme d'une pièce rigide, les éléments constitutifs de cette structure étant, par exemple, collés entre eux, ou sous la forme d'un assemblage "souple" d'éléments.

Dans ce dernier cas, qui est celui que l'on préfère, les éléments formant la structure unitaire sont réunis, entre eux, au moyen de pions de positionnement prévus sur certains de ces éléments et venant s'engager dans des trous aménagés dans les éléments voisins.

Pour faciliter le glissement des éléments les uns par rapport aux autres, les arêtes des éléments sont arrondies et un jeu est ménagé entre l'ensemble des éléments fixes ou mobiles et les parois de la boîte.

La boîte est avantageusement constituée de deux demi-boîtes identiques dont les bords, inclinés à 45° par rapport aux faces de la boîte, sont assemblés par collage.

De cette manière, un seul moule suffit pour fabriquer les demi-boîtes et obtenir par assemblage la boîte complète. La surface de collage est importante et assure une bonne rigidité à la boîte assemblée. En fabrication, le remplissage manuel de la boîte par les cubes est facile à effectuer en empilant tous les cubes dans une des demi-boîtes et en coiffant celle-ci par l'autre demi-boîte.

Le joueur n'ayant pas à toucher les éléments, mais ne faisant qu'incliner la boîte pour obtenir le déplacement de ceux-ci, les parois de la boîte peuvent être pleines, les éléments se trouvant ainsi dans une enceinte fermée.

Grâce à l'espace libre laissé par l'absence d'un élément et le jeu prévu entre les éléments et les parois de la boîte, lesdits éléments se déplacent très facilement dès que la boîte est penchée. Pour conserver les éléments dans une position de résolution du puzzle, par exemple pour assurer une présentation uniforme des puzzles pour la vente, il est souhaitable de pouvoir immobiliser les éléments.

A cette fin, le puzzle comporte une pièce de blocage pouvant, lorsque l'emplacement vide prévu pour le déplacement des éléments est situé immédiatement au-dessous d'une ouverture appropriée pratiquée dans la boîte, être introduite dans cette ouverture pour occuper l'emplacement vide et venir s'engager dans un logement aménagé dans le cube fixe à l'aplomb de ladite ouverture.

Dans une forme d'exécution préférée, les éléments ou leurs faces sont de couleur différente ou portent des symboles différents destinés à leur assigner une position unique dans la boîte.

Ces symboles peuvent être des chiffres, des lettres, des fragments d'image, etc.

Selon une autre forme d'exécution, les éléments présentent une partie transparente et une partie opaque incorporée de telle sorte qu'un objet apparaisse en volume visible à travers la partie transparente des éléments et les parois de la boîte.

D'autres caractéristiques et avantages de l'invention ressortiront de la description qui va suivre, faite en référence aux dessins annexés dans lesquels :

- la figure 1 est une vue en perspective d'une forme d'exécution de l'invention,

- la figure 2 montre la structure unitaire,

- la figure 3 montre un mode d'assemblage "souple" de la structure unitaire,

- la figure 4 représente un mode de réalisation de la boîte en deux demi-boîtes identiques, dont l'une est munie d'un moyen de blocage des éléments,

- la figure 5 représente une configuration particulière des éléments cubiques lors d'une fin de résolution, et

- la figure 6 montre une autre forme d'exécution de l'invention.

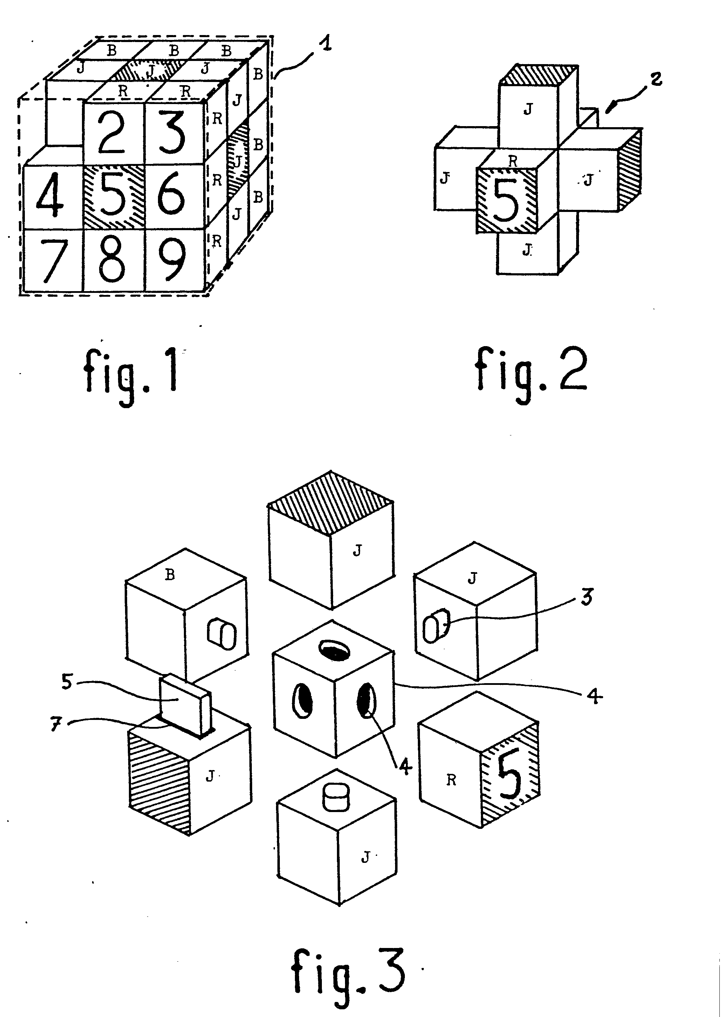

Dans la forme d'exécution de la figure 1, le puzzle est composé de vingt-six cubes identiques , en bois ou en matière plastique, de trois couleurs différentes : neuf cubes bleus (B), neuf cubes jaunes (J) et huit cubes rouges (R). Ces cubes sont enfermés dans une boîte en matière plastique transparente 1 d'épaisseur suffisante pour être pratiquement indéformable.

Les cubes bleus (B) sont numérotés de 1 à 9 sur leur face visible à travers une des parois de la boîte transparente 1. Les cubes jaunes (J) ne sont pas numérotés. Les cubes rouges (R) sont numérotés de 2 à 9 et sont visibles à travers la paroi transparente opposée à celle des cubes bleus (B).

La figure 1 montre la disposition des cubes bleus (B), jaunes (J) et rouges (R) lorsque le puzzle est résolu.

L'emplacement du cube rouge (R) qui porterait le chiffre "1" est vide. C'est cette case laissée vide qui permet, par des inclinaisons successives de la boîte 1, de déplacer les cubes mobiles dans les trois dimensions et de modifier ainsi leur disposition relative.

Le cube manquant pourrait aussi bien être un cube jaune (J), auquel cas la collection des cubes bleus (B) et rouges (R) serait complète et chacune comporterait neuf cubes numérotés de "1" à "9".

Le puzzle comprend sept cubes fixes par rapport à la boîte, lesquels cubes fixes sont signalés par des hachures sur les figures, et dix-neuf cubes mobiles. Les sept cubes fixes sont placés au centre et composent une structure tridimensionnelle 2 composée d'un cube central et de six cubes périphériques associés aux six faces du cube central (figure 2). Deux cubes accolés sur deux faces opposées du cube central sont respectivement bleu (B) et rouge (R) et sont marqués "5" sur leur face extérieure. Les cubes fixés sur les quatre autres faces du cube central sont jaunes (J) et ne portent pas de numéro.

L'objet de cette croix centrale 2 est de canaliser le déplacement des cubes mobiles le long des arêtes de la boîte 1 et de fixer la couleur des cubes à amener dans cette face. La croix centrale 2 ne présente pas de face collée à la paroi de la boîte 1. Elle est libre dans la boîte avec un certain jeu par rapport aux faces internes de cette boîte 1 de façon à faciliter le glissement des cubes les uns par rapport aux autres. Il est en effet important, pour que les deux cubes que l'on fait coulisser sur les trois cubes de niveau inférieur glissent facilement, que ces derniers soient exactement au même niveau. Cela implique que la croix centrale 2 repose par gravité sur la face inférieure de la boîte 1 de la même façon que les cubes mobiles. Elle doit donc être libre dans la boîte à l'intérieur du jeu ménagé entre l'ensemble des cubes et les faces internes de la boîte. Ce jeu doit être égal à environ un dixième de la longueur de l'arête d'un cube pour assurer un glissement facile des cubes mobiles.

D'autre part, pour faciliter ce glissement, les douze arêtes de chaque cube sont arrondies suivant un quart de cercle de rayon égal au dixième environ de la longueur d'une arête.

Plusieurs procédés de réalisation de la croix centrale 2 sont possibles. Un premier procédé consiste à réaliser une croix d'une seule pièce soit par collage des six cubes sur les faces du cube central, soit par moulage en utilisant un moule ayant la forme de la croix voulue.

Un deuxième procédé, plus intéressant, consiste à réaliser la croix 2 sans qu'il y ait de liaison rigide entre les sept cubes qui la composent.

La figure 3 indique le mode d'assemblage de ces cubes. Chacun des six cubes périphériques est muni, sur une de ses faces, d'un pion 3 de forme cylindrique qui vient s'engager dans un des six trous 4, formant logements, aménagés dans le cube central, ces trous étant largement dimensionnés. Un jeu suffisant existe entre le pion 3 et le logement 4 correspondant pour que ce pion 3 puisse coulisser librement. La seule condition à respecter est que la longueur des pions 3 soit supérieure au jeu total existant entre les cubes et la paroi de la boîte 1, de sorte que les cubes de la croix 2 soient bien positionnés au centre de chacune des faces de la boîte 1. La position des trous 4 et des pions 3 pourrait être inversée : le cube central pourrait être muni de pions 3 et les six cubes de trous 4 correspondants.

La réalisation de la croix 2 par réunion "souple" entre le cube central et les cubes périphériques présente un double avantage. D'une part, elle améliore le glissement des cubes les uns par rapport aux autres, puisque tous les cubes contenus dans la boîte sont identiques ; d'autre part, elle n'exige plus pour la fabrication des cubes qu'un moule de base unique correspondant au cube élémentaire.

Il peut être prévu un moyen simple pour assurer le blocage des cubes afin d'éviter le brouillage du puzzle pendant son transport de façon à le livrer à la vente dans la position où le puzzle est résolu. Ce moyen présente également l'avantage d'offrir un jeu comprenant une collection complète de cubes bleus (B) et rouges (R) du fait qu'il est introduit au niveau d'un cube jaune manquant situé entre le cube rouge marqué "1" et le cube bleu marqué "3".

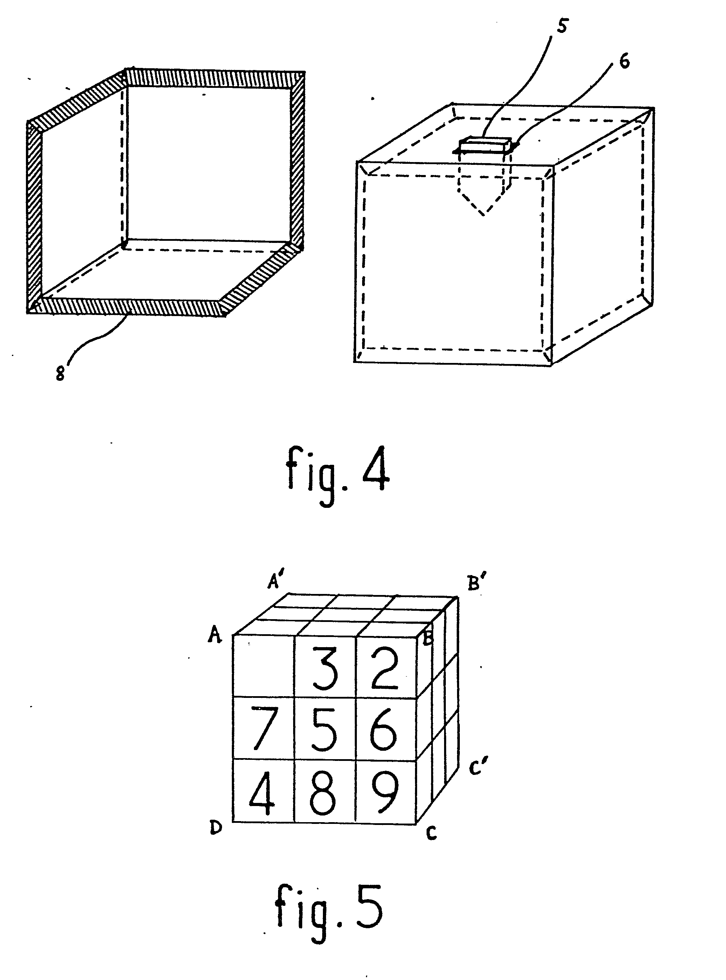

La figure 3 et la figure 4 montrent le moyen en question. Il s'agit d'une pièce plate 5 de largeur égale à celle d'un cube, pouvant être introduite dans une fente 6 aménagée dans la face supérieure de la boîte 1 et dont l'extrémité en biseau pénètre dans un évidement 7 prévu dans un cube jaune fixe. L'emplacement laissé vide est ainsi comblé. Cette pièce plate 5, de couleur jaune, symbolisant le cube manquant, permet d'immobiliser l'ensemble des cubes mobiles une fois le puzzle résolu. La hauteur de cette pièce plate 5 est telle que, complètement engagée, elle vienne affleurer la face supérieure de la boîte pour permettre un emballage facile du puzzle dans une boîte en carton. Elle s'extrait sans problème en retournant la boîte 1.

La figure 4 montre la constitution et l'assemblage de la boîte 1 en matière plastique transparente. Elle est composée de deux demi-boîtes identiques réalisées par moulage et collées ensemble. Chaque demi-boîte, en forme de trièdre, réalise trois faces de la boîte complète 1. Les bords 8 de chaque demi-boîte sont inclinés à 45° vers l'intérieur, de telle sorte que deux demi-boîtes identiques puissent être collées ensemble par leurs bords inclinés 8. La zone de collage est indiquée en hachuré sur la partie gauche de la figure 4. L'épaisseur des faces doit être de l'ordre du trentième de la longueur d'un côté de la boîte 1 pour lui assurer une rigidité suffisante.

Un orifice, non représenté, doit être prévu à l'un des sommets de la boîte 1 pour éviter les déformations des parois de la boîte sous l'effet des variations de la pression atmosphérique.

Ce puzzle présente deux niveaux de difficulté. Le premier niveau consiste, après brouillage, à répartir les cubes en trois couches suivant leur couleur. Les deux cubes bleu (B) et rouge (R) fixes, marqués "5", indiquent les faces qui doivent recevoir les cubes de la couleur correspondante.

Le deuxième niveau de difficulté consiste, en plus, à ranger les cubes bleus (B) et rouges (R) dans l'ordre numérique. Ce dernier résultat est plus intéressant et nettement plus difficile à obtenir. La découverte de la logique à utiliser constitue le principal attrait de ce puzzle.

Le fait que le cheminement des cubes mobiles soit parfaitement déterminé le long des arêtes de la boîte permet une notation très simple des solutions possibles pour passer d'une configuration des cubes à une autre. En effet, toute modification de l'ordre des cubes s'effectue en faisant décrire à la case vide un certain trajet le long des arêtes de la boîte. Il suffit de noter la suite des sommets parcourus.

Soit la fin de résolution à effectuer représentée à la figure 5 : les cubes bleus (B) et jaunes (J) sont à leur place, il reste à permuter les cubes rouges (R) "2" et "3" d'une part et les cubes rouges (R) "4" et "7" d'autre part. Si on appelle A,B,C et D les sommets de la face rouge (R) de la boîte et A', B', C'et D' les sommets de la face bleue (B), la séquence des coups à jouer, caractérisée par le trajet de la case vide, s'écrit : DD'A'B'BADCBB'A'ABCDAA'D'DA.

Toute une théorie peut ainsi être établie pour résoudre un certain nombre de cas types.

L'invention peut être généralisée au cas où la boîte a une forme parallélépipèdique. Appelons a, b, c les côtés exprimés par un multiple de la longueur du côté d'un cube. Pour que le chemin possible des cubes mobiles soit limité aux arêtes de la boîte permettant un déplacement des cubes sans ambiguité par simple gravité, il est nécessaire d'utiliser un nombre de cubes fixes F et un nombre de cubes mobiles M donnés par les formules:

$$F = abc - 4(a+b+c) + 16$$
$$M = 4(a+b+c)-17,$$

le nombre total des cubes T étant donné par la formule

$$T = abc - 1$$

L'exemple qui a été examiné aux figures 1 à 5 correspond à a=b=c=3 et donne F=7 et M=19. Ce cas est particulièrement intéressant car il conduit à une boîte cubique 3x3x3 aisée à manipuler, une croix centrale simple facile à fabriquer, un nombre de cubes mobiles acceptable et une difficulté de résolution raisonnable.

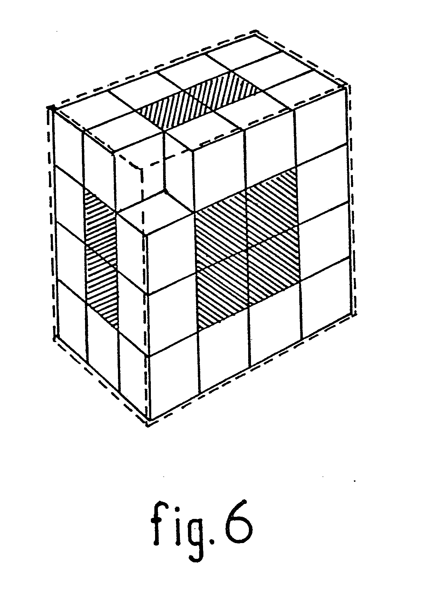

Le cas a=b=4 et c=3 donne F=20 et M=27, ce qui correspond à une boîte 4x4x3 comportant une croix dissymétrique composée de deux branches formées de quatre cubes, de quatre branches de deux cubes et d'une partie centrale formée de quatre cubes. Ce cas est représenté à la figure 6.

Le cas a=b=3 et c=2 donne F=2 et M=15. La boîte 3x3x2 ne comporte que deux couches de cubes et la partie fixe est réduite à deux cubes centraux qui doivent être immobilisés par deux pions de centrage fixés sur deux parois opposées

de la boîte.

Il est possible d'accroître la difficulté de la résolution du puzzle selon l'invention en réalisant la variante suivante, par exemple dans le cas du jeu 3x3x3 déjà considéré. Les cubes présentent des faces de couleur différente, de telle sorte que l'ensemble des cubes forme un grand cube dont les six faces ont par exemple les couleurs suivantes : bleu, jaune, rouge, orange, vert et blanc. Chaque cube appartenant a un sommet de la boîte présente trois faces de couleur différente, deux faces opposées étant de la même couleur. Chaque cube situé au milieu d'une arête de la boîte présente deux faces de couleur différente, les faces opposées étant de la même couleur et les deux dernières étant noires. On voit que chaque cube occupe une position unique à l'intérieur de la boîte. Le principe de ce puzzle consiste à réaliser un grand cube dont chaque face a une couleur identique à celle du cube fixe situé au centre de la face.

Une deuxième variante de l'invention consiste à utiliser des cubes présentant une partie transparente et une partie opaque colorée, de telle sorte que le puzzle, une fois résolu, fasse apparaître un objet visible en volume à travers la partie transparente des cubes et les parois de la boîte.

Le puzzle objet de l'invention peut être utilisé au premier niveau de difficulté en tant que jeu éducatif pour enfants, destiné à développer leur raisonnement logique.

Au deuxième niveau de difficulté et surtout dans la variante à six couleurs, il constitue un puzzle pour adultes. Il peut être employé comme test psychotechnique destiné à évaluer les facultés de logique des sujets soumis au test.

Ce puzzle peut également être exploité en publicité en faisant apparaître sur chacune des faces la marque publicitaire ou bien en reconstituant en volume, à l'intérieur du cube, l'objet soumis à la publicité. Le but du jeu est alors de reconstituer la marque ou l'objet lui-même.

Il est bien entendu que l'invention n'est pas limitée aux formes d'exécution représentées et décrites. En particulier, les éléments pourraient n'être pas cubiques, mais parallépipèdiques rectangles, leurs coins pourraient être tronqués, etc.

## REVENDICATIONS

1 - Puzzle tridimensionnel comprenant, d'une part, $\underline{n}$ éléments parallélépipèdiques identiques et, d'autre part, une boîte parallélépipèdique transparente dont les côtés sont des multiples de ceux d'un élément et dont le volume est sensiblement égal à celui de $\underline{n}$ + 1 éléments, le volume d'un élément laissé vacant dans la boîte permettant le déplacement d'au moins certains éléments et la valeur des multiples étant telle que deux éléments au moins des $\underline{n}$ éléments ne se trouvent pas en contact avec les arêtes de la boîte, caractérisé en ce que seuls les éléments placés le long des arêtes de la boîte (1) sont libres de se déplacer, les autres éléments formant entre eux une structure unitaire (2) qui les immobilisent.

2 - Puzzle selon la revendication.1, caractérisé en ce que la structure unitaire (2) revêt la forme d'une croix tridimensionnelle constituée par les éléments qui ne se trouvent pas en contact avec les arêtes de la boîte (1).

3 - Puzzle selon la revendication 1 ou 2, caractérisé en ce que les éléments sont cubiques.

4 - Puzzle selon la revendication 3, caractérisé en ce que la boîte (1) est cubique et en ce qu'elle contient dix - neuf cubes mobiles et, comme structure unitaire (2), une croix tridimensionnelle composée des six cubes situés au centre de chacune des faces de la boîte (1) et du cube situé au centre de la boîte (1).

5 - Puzzle selon l'une quelconque des revendications 1 à 4, caractérisé en ce que les éléments formant la structure unitaire (2) sont réunis, entre eux, au moyen de pions de positionnement (3) prévus sur certains éléments et venant s'engager dans des trous (4) aménagés dans les éléments voisins.

6 - Puzzle selon l'une quelconque des revendication 1 à 5, caractérisé en ce que les arêtes des éléments sont arrondies et en ce qu'un jeu est ménagé entre l'ensemble des éléments fixes (2) ou mobiles et les parois de la boîte (1).

7 - Puzzle selon l'une quelconque des revendications 1 à 6, caractérisé en ce que la boîte (1) est constituée de deux demi-boîtes identiques dont les bords (8), inclinés à 45° par rapport aux faces de la boîte (1), sont assemblés par collage.

8 - Puzzle selon l'une quelconque des revendications 1 à 7, caractérisé en ce que les parois de la boîte (1) sont pleines.

9 - Puzzle selon l'une quelconque des revendications 1 à 8, caractérisé en ce qu'il comporte une pièce de blocage (5) pouvant, lorsque l'emplacement vide prévu pour le déplacement des éléments est situé immédiatement au-dessous d'une ouverture (6) appropriée pratiquée dans la boîte (1), être introduite dans cette ouverture (6) pour occuper l'emplacement vide et venir s'engager dans un logement (7) aménagé dans le cube fixe à l'aplomb de ladite ouverture (6).

10 - Puzzle selon l'une quelconque des revendications 1 à 9, caractérisé en ce que les élements ou leurs faces sont de couleur différente ou portent des symboles différents destinés à leur assigner une position unique dans la boîte (1).

11 - Puzzle selon l'une quelconque des revendications 1 à 9, caractérisé en ce que les éléments présentent une partie transparente et une partie opaque incorporée de telle sorte qu'un objet apparaisse en volume visible à travers la partie transparente des éléments et les parois de la boîte (1).

fig.1

fig.2

fig.3

fig. 4

fig. 5

fig.6

**0042772**

Office européen
des brevets

**RAPPORT DE RECHERCHE EUROPEENNE**

Numéro de la demande

EP 81 40 0850

| Catégorie | DOCUMENTS CONSIDERES COMME PERTINENTS Citation du document avec indication, en cas de besoin, des parties pertinentes | Revendication concernée |
|---|---|---|
| X/P | GB - A - 2 064 965 (POSTASSY) <br> * page 1, lignes 74-106; page 2, lignes 78-88; figures * | 1-4,6, 8,10, 11 |
| | -- | |
| D | US - A - 3 845 959 (KOSAREK) <br> * abrégé; colonne 2, lignes 20-55; colonne 4, lignes 5-21; figures 1-4 * | 1,3,4, 6,10 |
| | -- | |
| | CH - A - 394 909 (RAHM) <br> * page 1, lignes 1-15; figures * | 5 |
| | -- | |
| A | FR - A - 1 435 115 (VIOT) | |
| A | CH - A - 129 908 (HAUSER) | |
| A | CH - A - 100 493 (PFENNINGER) | |
| | ----- | |

**CLASSEMENT DE LA DEMANDE** (Int. Cl.³)

A 63 F 9/12
G 09 B 1/34

**DOMAINES TECHNIQUES RECHERCHES** (Int. Cl.³)

A 63 F
G 09 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 30.09.1981 | GEF.IANO |

OEB Form 1503.1   06.78